# EUROPEAN PATENT SPECIFICATION

(11) **EP 4 060 334 B1**
(45) Date of publication and mention of the grant of the patent: **12.11.2025**
(21) Application number: 21163284.9
(22) Date of filing: 17.03.2021
(51) Int. Cl.: G01N 27/9013, G01N 21/88, G01N 21/89, G01N 27/82, B60R 21/02, B23P 23/06, B21D 43/00

(54) **A METHOD FOR TESTING A PIPE FOR AN AIRBAG SYSTEM**
VERFAHREN ZUM TESTEN EINES ROHRES FÜR EIN AIRBAGSYSTEM
PROCEDE D'ESSAI D'UN TUBE POUR UN SYSTEME D'AIRBAG

(43) Date of publication of application: 21.09.2022
(73) Proprietor: Tenaris Connections B.V., 1019 GM Amsterdam (NL)
(72) Inventor: NICOLINI, Alberto, Bergamo (IT); BONADEO, Nicolàs Hernàn, Buenos Aires (AR); SOLÓRZANO, Benito Pérez, Boca del Rio Veracruz (MX); ETCHEVERRY, Javier Ignacio, Buenos Aires (AR)
(74) Representative: Boult Wade Tennant LLP

(56) References cited:
- CN-B- 104 325 294
- CN-B- 109 615 654
- JP-A- 2015 029 995
- JP-A- S61 264 251
- US-A- 5 245 279
- US-A1- 2009 229 362

## Description

### BACKGROUND

The present description relates to a method for testing a pipe. The pipe particularly may be one cut from a longer section of stock pipe. Such a pipe may be used, for example, in an inflator for an airbag in a vehicle such as a car. Alternatively, such a pipe may be used in any other automotive system, a cooling system, a drilling bar, or a perforating tool.

An inflator is formed of a short cut section of pipe. This cut section of pipe is filled with a gas under pressure, and the ends are sealed. The pipe is sealed with a frangible element which is arranged to break following a vehicle accident or crash so that the gas under pressure can escape from the cut pipe, expand, and inflate the airbag. For example, there may be a small pyrotechnic charge in the cut pipe which is triggered by the vehicle accident. This pyrotechnic charge accelerates the rate of expansion of the gas under pressure.

Typically, these airbag pipes are formed from a long section of stock pipe, which may be cold drawn, which is cut to the required length of the airbag pipes, and processed, before being sent to the vehicle manufacturer. During the manufacturing process, the long section of stock pipe is inspected by a non-destructive testing instrument or instruments to inspect it for any faults which could compromise the safety of the finalised airbag pipe. It is known to use ultrasonic and/or eddy current testing scanning on the outer surface of the long stock pipe. Particularly, the stock pipe may have a length of between 6 and 14 metres.

In order to test a long section of pipe while maintaining a required level of productivity, the inspection rate required is typically around 1.5 metres of pipe per second, and the inspection is further complicated by the flexibility of such a long section of stock pipe. Besides this, there is the intrinsic limitation of being able to scan just the outside surface of the pipe to reveal discontinuities in the internal surface. Each of these issues result in a high rejection and false positive rate. When this testing identifies a discontinuity which is significant enough to be an actual flaw with a section of the stock pipe, this section must be cut out from the remaining stock pipe as it cannot be repaired. If the surrounding pieces are too short (typically less than 3 metres) they cannot be re-inspected, nor being processed in the following processes/machines and therefore must also be discarded. This results in large amounts of wastage of stock pipe.

While these problems have particularly been identified in relation to the manufacture of these airbag tubes, they are equally applicable to any process where a length of pipe needs to be formed and non-destructively tested.

There is therefore a need for an improved method and system for non-destructively testing a pipe.

JP 2015 029995 A discloses a method for detecting a flaw of a copper rough drawing wire.

CN 109 615 654 B discloses a drainage pipeline inner surface corrosion depth and area measurement method based on binocular vision.

US 5 245 279 A discloses a direct-current electromagnetic device for non-destructively detecting localized discontinuities in ferromagnetic objects.

CN 104 325 294 B discloses an automobile safety air bag steel pipe production line.

JP S61 264251 A discloses a material supply base which drops arranged and prepared bar materials to be examined onto a carrying device horizontally at every specified time one by one.

US 2009/229362 A1 discloses a method for non-destructive inspection of defects in a surface of a pipeline or storage tank.

### SUMMARY

A method of testing a pipe for an airbag system is provided according to claim 1.

A method of testing of a component of a system that includes a pipe of a first length is provided according to claim 9.

A method of testing of a component of a system that includes a pipe of a first length is provided. The method comprises the steps of: providing a second length of stock pipe, the second length being greater than the first length; cutting the stock pipe to the first length to produce a cut pipe; inspecting the cut pipe using a non-destructive inspection technique, the non-destructive inspection technique including the steps of: performing a first non-destructive test on an inner surface of the cut pipe; performing a second non-destructive test on an outer surface of the cut pipe; and rejecting the cut pipe if the step of inspecting the pipe identifies a flaw.

By cutting the pipe to length, and then carrying out the inspection, both internal and external tests can be carried out for a range of testing methods. This can improve the accuracy of the testing and reduces the number of rejected cut pipes.

The first non-destructive test and the second non-destructive test may both be an eddy current tests or both be a visual laser test. Each of these tests can only be performed on one surface of the pipe at a time. By first cutting the pipe, both the outer surface and the inner surface can be tested.

The method may further comprise the step of: performing a magnetic flux leakage test. A magnetic flux leakage test may identify different discontinuities and/or flaws that are not identified by other types of non-destructive tests.

The magnetic flux leakage test may be performed before the first non-destructive test and the second non-destructive test. Magnetic fields generated in eddy current testing can remain for a significant period of time and so interfere with the results of the magnetic flux leakage test. It is therefore preferable to carry out the magnetic flux leakage testing before eddy current testing.

The first non-destructive test and the second non-destructive test may both be an eddy current test, and the method may further comprising the step of: demagnetising the cut pipe between: the magnetic flux leakage test; and the first and second non-destructive tests. Demagnetising the cut pipe ensures that each test is free from interference from an earlier test.

The method may further comprise the step of: performing a laser visual test on at least an inner surface of the cut pipe and preferably also on an outer surface of the cut pipe, wherein the laser visual test includes projecting a laser onto the pipe and capturing an image of the projected laser, and is performed after the first non-destructive test and the second non-destructive test. A laser visual test may identify different discontinuities and/or flaws than eddy current testing or magnetic flux leakage testing.

Preferably, the visual laser test(s) is only performed if the first non-destructive test and the second non-destructive test do not identify a flaw. A visual laser test is slow compared to other types of non-destructive tests. For this reason, it is preferably performed last. If this slow test is only performed on pipes which have passed the earlier tests, inefficiency in the system can be reduced.

The step of providing a second length of stock pipe may comprise the steps of: drawing the stock pipe through a die to reduce an outer diameter of the stock pipe. This is an effective method of preparing the stock pipe prior to being cut to length. The stock pipe may be cold-drawn through the die.

The stock pipe may be formed of a steel. Steel is a particularly effective metal for use in such cut pipes, such as those for use in vehicle airbags.

The step of rejecting the cut pipe if the step of inspecting the pipe identifies a flaw comprises comparing a measurement or a variable derived from a measurement of the cut pipe to a threshold, wherein the threshold is varied based upon a longitudinal location of the measurement along the cut pipe. Different areas of the pipe may experience different forces in use. Since the test is carried out on a pipe that has been cut substantially to the length in which it will be used in the final product, it is possible to know which regions of the pipe will be subject to different forces, as compared with stock pipe, in which any part could be cut to form the final product. This may mean that different discontinuities can be tolerated in the different regions. For example, a region which will undergo a lower force may be able to accommodate a larger discontinuities than a region which will undergo a larger force. This therefore further reduces the rejection rate.

The threshold may be lower at a first and second end of the pipe. In certain embodiments, such as vehicle airbags, the ends of the pipe may experience greater forces during the airbag deployment than the mid-section.

The method may further comprise the step of: incorporating the cut pipe in the system being manufactured if the cut pipe is not rejected. If the pipe has no flaws, it can be used to manufacture the system.

The first length may be greater than 3 metres, particularly between 6 metres and 14 metres. Such lengths are typical for manufactured stock pipes.

The second length may be less than 0.5 metres. Pipes of this length may be used in manufactured products, such as airbag inflators.

The system being manufactured may be a vehicle airbag inflator. An airbag inflator typically incorporates a pipe that could be tested using this method.

The method may further comprise the steps of filling the cut pipe with a gas under pressure and closing the pipe, for example by: sealing at least one end of the pipe with a frangible component; and assembling the pipe with an actuation mechanism configured to break the frangible component in response to a vehicle accident so as to release the gas under pressure from the cut pipe. This produces a closed pipe for use in a vehicle airbag.

A testing device for non-destructive testing of a pipe is provided, which may be used with the methods according to the present invention. The testing device comprises: a first testing arrangement positionable relative to the pipe comprising: at least one magnet comprising a north pole and a south pole; one or more magnetic sensors arranged between the north pole and the south pole arranged to detect magnetic flux leakage from the pipe; a second testing arrangement positionable relative to the pipe comprising: one or more conductive coils for sensing eddy currents in the pipe; a third testing arrangement positionable relative to the pipe comprising: a first laser arranged to project a laser onto the pipe; a camera arranged to capture an image of the pipe where the laser is projected.

A device incorporating these three testing methods can comprehensively perform non-destructive testing on a pipe.

The one or more conductive coils may comprise: a first conductive coil arranged to sense eddy currents associated with an inner surface of the pipe; and a second conductive coil arranged to detect sense eddy currents associated with an outer diameter of the pipe. Eddy current testing is typically only able to detect discontinuities on the surface of the pipe which the sensors are placed adjacent to, it is therefore beneficial to test both the outer surface and the inner surface of the pipe.

The first laser may be arranged to project a laser onto an inner surface of the pipe; and the third testing arrangement may comprise a second laser arranged to project a laser onto an outer surface of the pipe. Visual laser testing is typically only able to detect discontinuities on one surface of the pipe, it is therefore beneficial to test both the outer surface and the inner surface of the pipe using the visual laser test.

The one or more conductive coils may have a coil diameter of less than 5 mm. The coil diameter effectively defines the resolution of the eddy current testing. That is, a smaller coil can detect a smaller discontinuity and hence flaw in the pipe.

The one or more conductive coils may comprises a plurality of coils arranged in an array, preferably at least 8 coils, more preferably at least 16 coils. An array allows a larger area of the pipe to be tested at a given time.

One or more of the conductive coils in the plurality of coils may be arranged to overlap one another in the array. An array of coils arranged in this manner can increase the noise ratio so as to eliminate common noise.

The testing device may further comprise a conveying means arranged to transport the pipe between the first testing arrangement, the second testing arrangement, and the third testing arrangement. The conveying means can help automate the device so that pipes can be quickly subjected to all of the non-destructive tests. It is preferable to move the cut pipe rather than the testing equipment.

The conveying means may be a rotatable turntable, with the first testing arrangement, the second testing arrangement, and the third testing arrangement arranged circumferentially around the turntable. This is an effective arrangement for the conveying means, allowing simple movement of the pipes between non-destructive tests.

The first testing arrangement may be arranged before the second testing arrangement. Eddy current testing of the second testing arrangement can induce magnetic fields in the pipe, which can interfere with magnetic flux testing of the first testing arrangement. It is therefore preferable to carry out the magnetic flux testing first to avoid such interference. The testing device may further comprise a demagnetizer arranged to demagnetize the pipe before it is transferred to the second testing arrangement. This can be used to remove any lingering magnetic fields and thereby improve the accuracy of the subsequent non-destructive testing steps that involve electromagnetic measurements.

The third testing arrangement may be arranged after the first testing arrangement and the second testing arrangement. The visual laser testing of the third testing arrangement is computationally expensive and slow. It is therefore beneficial for this test to be the final test, as it means that pipes can be rejected if the first testing arrangement or the second testing arrangement identifies a flaw. For any pipes with such an identified flaw, it is not necessary to carry out the visual laser testing, thereby increasing the speed and efficiency of the testing device.

An assembly line is provided, which may be used with the methods according to the present invention. The assembly line first cuts the pipe from a longer stock pipe, before passing this to the testing device discussed above. The assembly line comprises: a testing device as discussed above; and a cutting device arranged to: receive a stock pipe of a first length; cut the stock pipe to a first length to produce a cut pipe; and pass the cut pipe to the testing device.

A method of testing a pipe for an airbag system is provided. The method comprises the steps of: performing a magnetic flux leakage test on the pipe; performing an eddy current test on the pipe; and performing a laser visual test on the pipe, by projecting a laser onto the pipe and capturing an image of the projected laser. Performing the three types of non-destructive testing allows for effective and efficient inspection of a pipe for an airbag system, which results in fewer rejections.

The magnetic flux leakage test may be performed before the eddy current test and the laser visual test. Eddy current testing can induce magnetic fields in the pipe, which may interfere with magnetic flux testing. It is therefore preferable to carry out the magnetic flux testing first to avoid errors.

The method may further comprise the step of: demagnetising the pipe between the steps of: performing the magnetic flux leakage test; and performing the eddy current test and the laser visual test. This can be used to remove any lingering magnetic fields and thereby improve the accuracy of the non-destructive testing.

The laser visual test may be performed after the magnetic flux leakage test and the eddy current test. The visual laser testing is slow. It is therefore beneficial for this test to be the final test, as it means that pipes can be rejected if the magnetic flux testing or the eddy current testing identifies a flaw. For any pipes with such an identified flaw, it is not necessary to carry out the visual laser testing, thereby increasing the speed and efficiency of the testing device.

The eddy current test and/or the laser visual test may be performed on an inner diameter and an outer diameter of the pipe. Each of these tests only identify discontinuities and/or flaws on the surface being tested. It is therefore preferable to test both the outer surface and the inner surface of the pipe.

A flaw is identified by comparing a measurement (or a variable derived from a measurement) from at least one of the magnetic flux leakage test, the eddy current test, and the laser visual test with a threshold, wherein the threshold is varied based upon a longitudinal location of the measurement along the cut pipe. Different sections of the pipe may encounter different forces in use. They therefore may be able to accommodate discontinuities of differing severity before the discontinuities are an actual flaw which requires the pipe to be rejected.

The threshold is different at a first and second end of the pipe, such that the device is inspection is more sensitive to discontinuities and/or flaws at the ends of the pipe. A typical pipe for an airbag experiences the greatest forces at the two ends of the pipe. These ends therefore need to be stronger than the mid-section of the pipe. As such, the ends of the pipe can accommodate smaller discontinuities than the mid-section of the pipe.

A flaw may be identified by taking a plurality of measurements during at least one of the magnetic flux leakage test, the eddy current test, and the laser visual test, and wherein the measurements are taken at a first resolution at a first location on the pipe, wherein the measurements are taken at a second resolution at a second location on the pipe, the second resolution being different from the first resolution. The first location and the second location may encounter different forces in use, such that different sizes of flaw must be identified. In a section which encounters less force, a larger discontinuity may be allowed before it is classified as an actual flaw which requires rejection of the pipe. Therefore, the resolution of the testing in this area may be less such that it would not identify such a smaller discontinuity. In a separate position on the pipe which undergoes greater stress, a discontinuity of the same size may be an actual flaw. In this separate position, a higher resolution may be used so that such a smaller discontinuity is identified.

### BRIEF DESCRIPTION OF THE DRAWINGS

The present description will refer, by way of example only, to the accompanying Figures in which:
Figure 1 shows a top schematic of a testing device for a pipe;
Figures 2A and 2B show a schematic of a magnetic flux testing assembly;
Figures 3A and 3B show a schematic of an eddy current testing assembly;
Figure 3C shows a plot of the measured impedance from two eddy current tests;
Figure 4 shows a schematic of a visual laser testing assembly;
Figure 4A shows a schematic of a discontinuity in a pipe being tested with a visual laser testing assembly;
Figure 4B shows a plot of the image recorded in the test of Figure 4A;
Figure 5 shows a flow chart of a method for testing a pipe;
Figure 6 shows a further flow chart of a method for testing a pipe;
Figure 7 shows a perspective view of a pipe for an airbag;
Figure 8 shows a schematic cross-section of a pipe for an airbag; and
Figure 9 shows a schematic side view of a pipe, along with a plot of tolerance levels.

### DETAILED DESCRIPTION OF THE DRAWINGS

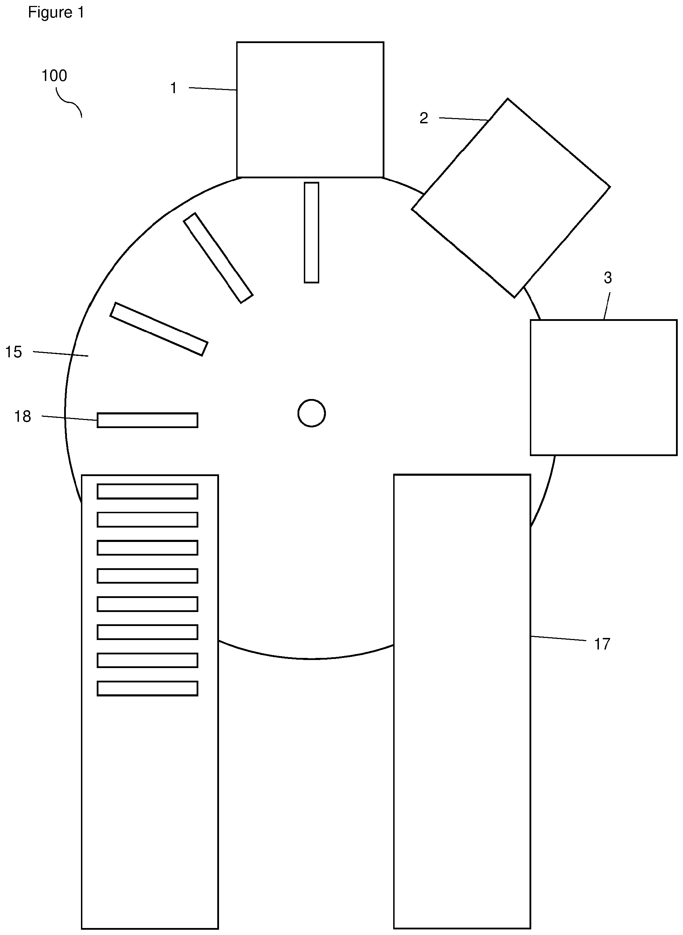

Figure 1 shows a testing device 100 which may be used in the methods according to the present invention. The testing device 100 is formed of a number of testing arrangements 1, 2, 3. Particularly, the testing device 100 may comprise a first testing arrangement 1, a second testing arrangement 2 and a third testing arrangement 3.

Each of the testing arrangements 1, 2, 3 carries out a different non-destructive test on a length of cut pipe 8 supplied thereto. While the testing arrangements are described as first, second and third they may perform their respective non-destructive test on the cut pipe 8 in any order. In particular examples, the order of the non-destructive tests may be specified.

The length of cut pipe 8 may be cut from a longer stock pipe (not shown). Each length of cut pipe 8 may be cut-to-length for a particular application. For example, each length of cut pipe 8 may be used as a pipe in a vehicle airbag system (discussed below). The longer stock pipe may have been formed by drawing a pipe with a larger diameter through a die, for example by cold drawing. The stock pipe may be formed of steel, such as a carbon steel. In general, the stock pipe may be any material in which eddy currents can be induced, such as a ferromagnetic material.

The cut pipe 8 may have a length of less than 0.5 metres. Particularly, the cut pipe 8 may have a length between 0.15 metres and 0.4 metres. Each cut pipe 8 defines a longitudinal direction extending axially along the length of the cut pipe 8. The cut pipe 8 has an outer surface 8A and an inner surface 8B. The inner surface 8B defines a bore formed through the cut pipe 8.

In the depicted example, the cut pipes 8 are delivered to the testing device 100 via a conveyor belt 4. However, the cut pipes 8 may be transported via any suitable method in a manufacturing process.

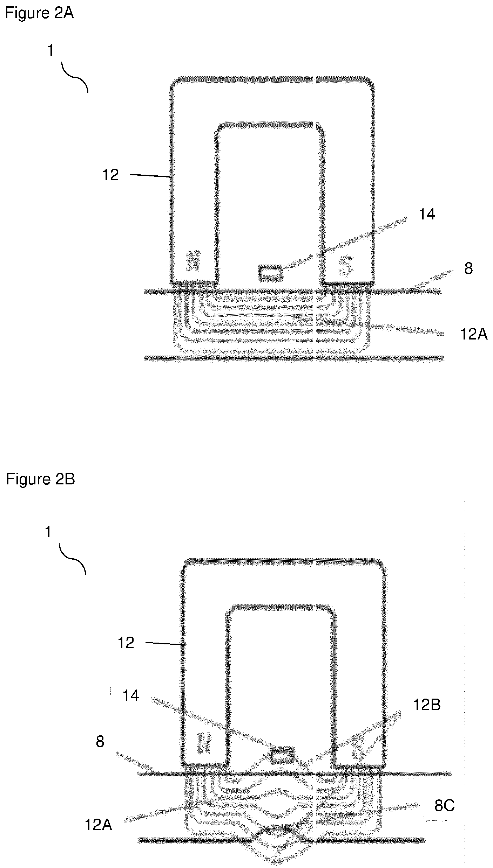

The first testing arrangement 1 may be configured to carry out a first non-destructive test on the cut pipe 8. The first non-destructive test may be a magnetic flux leakage test. The basic schematic for the magnetic flux leakage test is shown in Figures 2A and 2B.

The first testing arrangement 1 may comprise at least one magnet 12. The magnet 12 may be a permanent magnet or an electromagnet, as appropriate. The magnet 12 has a North pole and a South pole. The first testing arrangement 1 is positionable relative to the cut pipe 8 such that the magnet 12 is adjacent the cut pipe 8. Particularly, the North pole and South pole of the magnet 12 may be spaced from one another along the longitudinal direction of the cut pipe 8.

The magnet 12 will generate a magnetic field 12A. This magnetic field 12A will penetrate the cut pipe 8. One or more magnetic sensors 14 are arranged between the North pole and the South pole of the magnet 12. The magnetic sensors 14 are operable to detect any magnetic flux leakage 12B from the cut pipe 8.

Figure 2A shows a schematic of the first testing apparatus 1 when testing a section of the cut pipe 8 which does not have any discontinuities and/or actual flaws. The magnetic flux 12A does not leak from the cut pipe 8 or, at least, does not leak to the same degree. Therefore, the magnetic sensors 14 do not detect any, or as much, magnetic flux leakage 12B. As the cut pipe 8 will not be perfect, it is likely that there will be a degree of magnetic flux leakage 12B. This may be too low to register on the magnetic sensors 14 based upon their sensitivity.

Alternatively, the measurement of magnetic flux leakage 12B may be compared to a particular threshold for the cut pipe 8 in order to determine whether an actual flaw has been detected. As discussed in more detail below, the threshold may be a hybrid threshold that takes into account the results of multiple tests. Alternatively, or additionally, the threshold may vary based upon the longitudinal location of the measurement along the cut pipe 8. In any event, the first testing apparatus 1 will generally indicate that the test of Figure 2A has not identified a flaw in the cut pipe 8 and hence the testing device 100 will not reject the cut pipe 8.

Figure 2B shows a further section of the cut pipe 8, where a discontinuity 8C is present. While the depicted discontinuities 8C is a dent in the cut pipe 8, this may be any discontinuities 8C such as a notch, bulge, or other manufacturing discontinuities.

Due to the presence of the discontinuity 8C, the magnetic field 12A passing through the cut pipe 8 results in magnetic flux leakage 12B. This magnetic flux leakage 12B is detected by the magnetic sensor 14. This therefore means that the first testing assembly 1 has identified a discontinuity 8C, and the cut pipe 8 may be rejected. As noted above, the signal from the magnetic sensor 14 may be compared to a threshold in order to determine the size of the discontinuity 8C. This may be used to indicate whether the discontinuity 8C meets the threshold for the cut pipe 8 to be rejected as the discontinuity 8D is a flaw. That is, if the discontinuity 8C is too insignificant to generate a signal which is greater than the threshold, the cut pipe 8 may not be rejected.

The resolution of the magnetic flux leakage sensing may be defined by the coil size of the magnetic sensor 12. In the present embodiment, we may use coils of less than 15 millimetres. The coil size is selected for the particular use case in order to detect discontinuities of a required size.

Due to the nature of magnetic flux leakage testing, a test applied to the outer surface 8A of the cut pipe 8 may be sufficient to detect discontinuities 8D regardless of whether they are formed on the outer surface 8A of the cut pipe 8 or the inner surface 8B of the cut pipe 8, or anywhere therebetween.

The cut pipe 8 may be rotated at the first testing apparatus 1 such that the entire inner surface 8B and outer surface 8A of the cut pipe 8 can be tested.

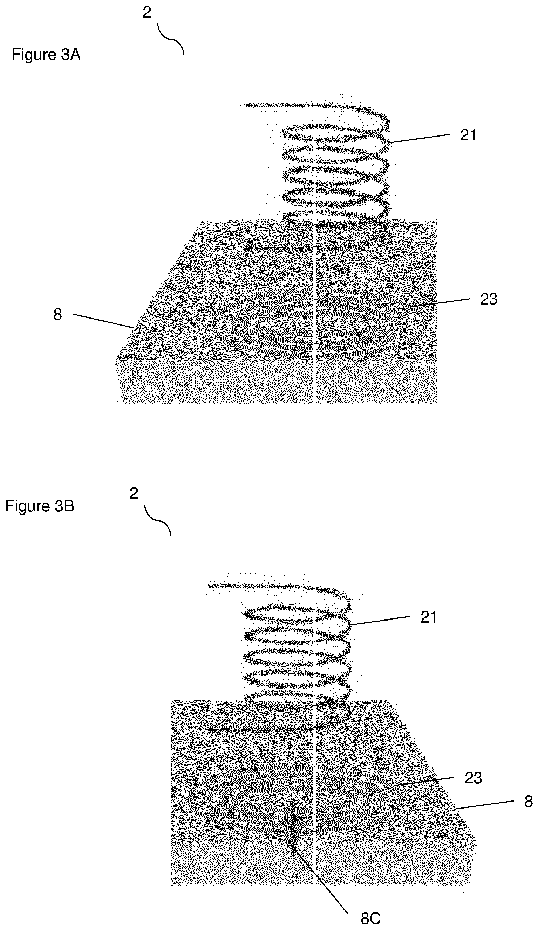

The operation of the second testing arrangement 2 will be described with respect to Figures 3A to 3B. The second testing arrangement 2 may be an eddy current test. Figures 3A and 3B show a schematic of this in its simplest form.

One or more conductive coils 21 are provided. Particularly, these conductive coils 21 may be formed of a conductive wire which has been coiled. An alternating current (AC) is passed through the conductive coils 21. The conductive coils 21 therefore generate an alternating magnetic field around themselves. The magnetic field generated alternates at the same frequency as the AC current.

The second testing arrangement 2 is positionable relative to the cut pipe 8 such that the conductive coils 21 are generally adjacent thereto and induce eddy currents 23 therein. The eddy currents 23 which are generated in the cut pipe 8 are opposite to those in the conductive coils 21. The presence of any discontinuities 8C in the cut pipe 8 result in a change in the induced eddy currents 23. These changes may include interrupting or altering the amplitude and/or pattern of the induced eddy currents 23.

The alteration in the eddy currents 23 in turn affects the movement of electrons in the conductive coils 21, thereby altering their impedance. The change in impedance of the conductive coils 21 can be used to identify a discontinuity 8D in the cut pipe 8.

Figure 3A shows an eddy current test being carried out by the second testing arrangement 2 on a section of the cut pipe 8 without any discontinuities 8D. As can be seen, the eddy currents 23 are regular and uninterrupted. This will mean that the impedance of the conductive coils 21 does not significantly deviate from a reference value Zᵣ. This lack of deviation indicates that the cut pipe 8 is free of a discontinuity 8C in the tested region, and should not be rejected. Again, as with the first testing station 1, the measured impedance may be compared to a threshold to consider whether a discontinuity 8C is a flaw and hence is significant enough to warrant rejection of the cut pipe 8. For example, the threshold may be based upon a particular deviation from the reference impedance Zᵣ. This could be based upon the magnitude and/or phase characteristics of the measured impedance.

Figure 3B shows an eddy current test being performed by the second testing apparatus 2 on a section of cut pipe 8 having a discontinuity 8C. The AC current is applied to the conductive coils 21 in the same manner as for Figure 3A, with the associated eddy currents 23 induced in the section of cut pipe 8. However, as the cut pipe 8 has a discontinuity 8C, the induced eddy currents 23 are distorted by the discontinuity 8C. In simple terms this is reflected in Figure 3B with the eddy currents 23 following the shape of the discontinuity 8C.

As a result of the eddy currents 23 being distorted by the discontinuity 8C, the distorted eddy currents 23 will affect the flow of electrons in the conductive coils 21, thereby altering their impedance. Thus, the measured impedance of the conductive coils 21 is altered.

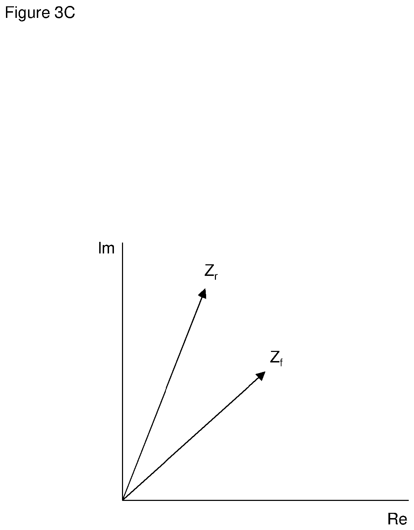

Figure 3C shows how the impedance measured in Figure 3B, denoted Z_{f}, differs from the reference impedance Zᵣ. Particularly, this measured impedance Z_{f} may have a different magnitude and/or phase when compared to the reference impedance Zᵣ. The difference between the measured impedance Z_{f} and the reference impedance Zᵣ can be used to identify the discontinuity 8C in the section of cut pipe 8, and can be used to determine whether the discontinuity is an actual flaw.

The resolution of the eddy current testing is essentially defined by the coil size of the conductive coils 21. In the present example, the coil size may be less than 5 millimetres.

The conductive coils 21 may be arranged in an array in order to detect a discontinuity 8C over a larger area of the cut pipe 8. Particularly, the array may include at least 8 or 16 conductive coils 21. The conductive coils 21 in the array may be arranged to overlap with one another.

Eddy current testing in this manner typically only detects discontinuities on the surface which the conductive coils 21 are arranged adjacent to. Thus, the eddy current testing is typically specific to the outer surface 8A or the outer surface 8B of the cut pipe 8, dependent on which surface the conductive coils 21 are positioned adjacent to.

The second testing assembly 2 may perform the eddy current test on both the outer surface 8A and the inner surface 8B of the cut pipe 8. This may be achieved in a number of ways. For example, the conductive coils 21 may be arranged on an articulated component which is able to move between a first position arranged adjacent to the outer surface 8A of the cut pipe 8 and an inner surface 8B of the cut pipe 8. For example, the articulated component could be formed as an arm able to be inserted into the bore of the cut pipe 8.

Alternatively, the second testing assembly 2 may include first and second testing stations. The first testing station may include at least one conductive coil 21 which is arrangeable adjacent an outer surface 8A of the cut pipe 8. The second testing station may include at least one conductive coil 21 which is arrangeable adjacent an inner surface 8B of the cut pipe 8.

The cut pipe 8 may be rotated at the second testing assembly 2, such that the entire outer surface 8A and/or inner surface 8B may be tested.

In this sense, the second testing assembly 2 may be able to perform an eddy current test on both an outer surface 8A and an inner surface 8B of the cut pipe 8.

The eddy current testing will generate magnetic fields within the cut pipe 8. It is therefore beneficial to perform the magnetic flux leakage testing of the first testing assemble 1 before the eddy current testing of the second testing assembly 2. Otherwise, any lingering eddy currents 23 in the cut pipe 8 may generate a magnetic field which could interfere with the magnetic flux leakage testing.

Before carrying out eddy current testing it is beneficial to demagnetise the cut pipe 8. In particular embodiments, a demagnetisation (also known as degaussing) step is carried out between the magnetic flux leakage testing of the first testing assembly 1 and the eddy current testing of the second testing assembly 2.

This demagnetisation may be carried out in the first testing assembly 1, before the cut pipe 8 is transferred to the second testing assembly 2 for eddy current testing. In particular, the demagnetisation may be carried out by applying a current to the cut pipe 8 which demagnetises the cut pipe 8 in accordance with a magnetic hysteresis curve.

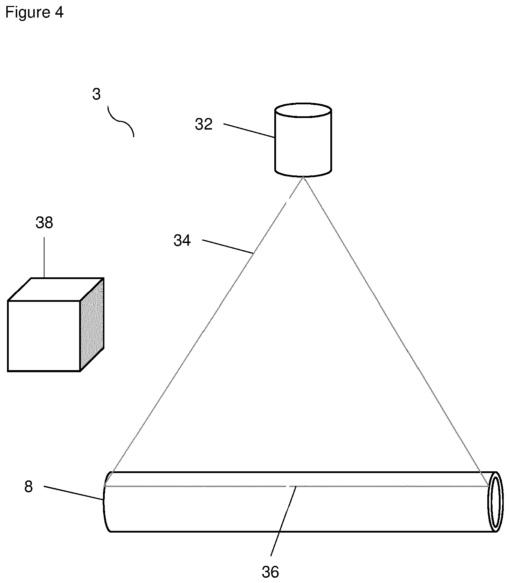

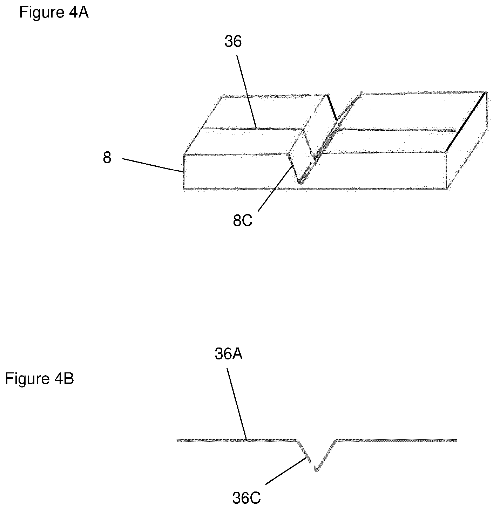

The operation of the third testing assembly 3 will be described with reference to Figures 4, 4A and 4B.

The third testing assembly 3 may be perform a visual laser test. In order to perform this test, a laser emitter 32 may be arranged to emit a laser beam 34. The laser beam 34 may in particular be a fan beam. Alternatively, the laser beam 34 may be any suitable beam for performing the visual laser test. The laser beam 34 is projected onto the cut pipe 8 in order to form a projected line 36. While the projected line 36 is shown generally along the longitudinal direction of the cut pipe 8, this could equally be projected in any other direction, such as perpendicular to the longitudinal direction.

In order to test the entire outer surface 8A of the cut pipe 8, the cut pipe 8 may be rotated such that the projected line 36 is projected on substantially the entire outer surface 8A of the cut pipe. For example, with a projected line 36 in the longitudinal direction of the cut pipe 8, the cut pipe 8 may be rotated around its longitudinal central axis.

A camera 38 is provided, generally with a field of view transverse to the laser beam 34. In particular embodiments, the field of view of the camera 38 may be generally orthogonal to the laser beam 34.

The camera 38 captures an image of the projected line 36, and uses this to determine whether there are any discontinuities 8C along the cut pipe 8. While Figure 4 shows the laser emitter 32 and camera 38 facing an outer surface 8A of the cut pipe 8, this method can equally be applied to an inner surface 8B of the cut pipe 8.

In order to test the inner surface 8B of the cut pipe 8, a testing probe may be inserted into the cut pipe 8. The testing probe may emit the laser beam 34 such that the projected line 36 is circumferential around the inner surface 8B of the cut pipe 8. The camera 38 may be provided as a component of the testing probe, or may view the projected line 36 from the opposite end of the cut pipe 8. The testing probe is progressively inserted into the bore of the cut pipe 8 such that the entire length can be visually inspected on its interior.

In particular arrangements, the testing probe may have a field of vision that only allows a particular portion of the cut pipe 8 to have its inner surface 8B visually inspected at a time. In order to test the entire inner surface 8B, the cut pipe 8 may be rotated with the testing probe kept stationary. For example, the testing probe may be inserted in a first direction along the entire length of the cut pipe 8 to test a first portion of the inner surface 8B. Once the entire length of cut pipe 8 has been tested along this portion, the cut pipe 8 may be rotated and the testing probe removed from the device in a second direction opposite to the first direction. As the testing probe is being removed, it can test a second portion of the cut pipe 8. These steps can be repeated as many times as necessary to visually inspect the entire inner surface 8B of the cut pipe 8.

In particular arrangements, the testing probe may emit two laser beams 34 which are spaced 180° from one another around the inner surface 8B of the cut pipe 8. That is, each laser beam 34 will be in an opposite direction to the other. These laser beams 34 may project a projected line 36 which can be usefully measured by the camera 38 over an inner circumference of approximately 100°. The first section defined by such a probe would therefore cover approximately 200°, or 55% of the inner surface 8B of the cut pipe 8. After such a testing probe has travelled the entire length of the cut pipe 8, the cut pipe 8 may be rotated through 90° about its longitudinal axis. The testing probe can then be removed from the cut pipe 8 and test the second portion of the inner surface 8B of the cut pipe 8 as it is removed. There will be a degree of overlap between the first section and the second section such that the entire inner surface 8B of the cut pipe 8 is tested by the insertion and removal of the testing probe. Of course, other arrangements of the testing probe are possible.

The profile of the image of the projected line 36 captured by the camera 38 shows the presence of any discontinuities 8C on the cut pipe section 8. If the cut pipe 8 is generally devoid of any discontinuities 8C the profile of the projected line 36 will be generally straight. Any discontinuities 8C will introduce a corresponding deviation in the profile of the projected line 36, which can be identified. Again, the deviation may be compared to a threshold in order to consider whether the deviation surpasses the threshold which results in rejecting the cut pipe 8.

Figures 4A and 4B show the visual laser test of the third testing apparatus 3 in use on a section of cut pipe 8 with a discontinuity 8C. The projected line 36 is projection across the section of cut pipe 8 from the laser emitter 32. As there is a discontinuity 8C in the form of a notch, the projected line 36 conforms to the shape of the discontinuity 8C. Figure 4B shows the image 36A of the projected line 36 detected by the camera 38.

The image 36A of the projected line 36, includes a deviation 36C from a completely straight line. This deviation 36C corresponds in shape to the discontinuity 8C in the cut pipe 8. The profile of the image 36A can be reviewed in order to identify the discontinuity 8C in the cut pipe 8, and then used to decide to reject the cut pipe 8. For example, this may be carried out using image analysis software. Such a visual laser test is particularly effective at identifying dents in the cut pipe 8.

As with the eddy current testing of the second testing assembly 2, the visual laser testing of the third testing assembly 3 is specific to the surface of the cut pipe 8 that the laser emitter 32 projects the projected line 36 onto. In the depicted example, this is the outer surface 8A. However, this could also be applied to the inner surface 8B of the cut pipe 8.

In particular examples, the third testing assembly 3 may be configured to perform a visual laser test on both an outer surface 8A and an inner surface 8B of the cut pipe 8. Again, this may be by the laser emitter 32 and camera 38 being arranged on respective articulated components so that they can be moved between positions for inspecting the outer surface 8A and the inner surface 8B. Alternatively, the third testing assembly 3 may include first and second testing stations. The first testing station may include a first laser emitter 32 arranged to project the projected line 36 onto an outer surface 8A of the cut pipe 8, with a corresponding first camera 38. The second testing station may include a second laser emitter 32 arranged to project the projected line 36 onto an inner surface 8B of the cut pipe 8, with a corresponding second camera 38. The first and second laser emitter 32 and/or camera 38 may be the same and shared between the two testing stations, for example by being moved to corresponding positions.

In particular examples, the laser visual testing of the third testing apparatus 3 may be the final non-destructive test to be carried out. That is, the cut pipes 8 may first be subject to the magnetic flux leakage testing of the first testing apparatus 1 and/or the eddy current testing of the second testing apparatus 2 as appropriate. The laser visual testing requires image analysis in order to detect the image 36A of the projected line 36. This is relatively processor-intensive. It may therefore be beneficial to use the other non-destructive tests as an effective first-pass test. If the earlier non-destructive tests identify a discontinuity 8C in the cut pipe 8 which is an actual flaw that means it must be rejected, the laser visual test may not be performed on the particular pipe 8 which has already been marked for rejection.

This means that the processor-intensive visual laser test is not carried out on a pipe 8 for which the first testing apparatus 1 and/or the second testing apparatus 2 has already identified an actual flaw. This can help increase the speed of the testing device 100 by only carrying out the relatively slower visual laser testing on cut pipes 8 which have already passed these earlier tests.

The testing device 100 may further comprise a conveying means for transporting the cut pipe 8 between the first testing arrangement 1, the second testing arrangement 2 and the third testing arrangement 3. This may be how the order of the testing apparatus 1, 2, 3 is determined. In particular examples, the conveying means may be a rotatable turntable 15. Each of the first testing arrangement 1, the second testing arrangement 2 and the third testing arrangement 3 may be arranged as circumferentially distributed locations around the turntable 15. Thus, as the turntable 15 rotates the cut pipes 8 are moved between the testing apparatus 1, 2, 3. Of course, any other suitable conveying means may be used such as a linear conveyor, a robotic arm, or any other suitable means.

Once the cut pipe 8 has been tested, it can be removed from the testing device 100, such as via an exit conveyor 17. Any cut pipes 8 which have been determined to have an impermissible fault 8C will be rejected, and not used to manufacture whatever system the cut pipe 8 is to be incorporated in to.

As noted above, one or more of the testing apparatus 1, 2, 3 may be omitted based upon the particular testing regime required. Likewise, the testing apparatus 1, 2, 3 may be arranged in any suitable order. While the above description is particularly of a cut pipe 8, it is noted that the testing device 100 may be applied to other types of pipe, including those formed to an appropriate length via alternative methods.

Hybrid thresholds for the testing apparatus 1, 2, 3 were briefly mentioned above. These essentially allow a combined value to be put on the results of a plurality of the non-destructive testing methods. This combined value can then be compared with a combined threshold in order to determine whether any discontinuity 8C amounts to an actual flaw which requires the pipe 8 to be rejected. The combined value may be calculated by simple summation, or a more complex formula. In particular examples, the results of different types of non-destructive test may be weighted in the calculation of the combined value.

In this sense, measurements which individually may be acceptable for a given non-destructive test may cumulatively be used to identify that there actually is an actual unallowable flaw 8C in the pipe 8, which therefore must be rejected.

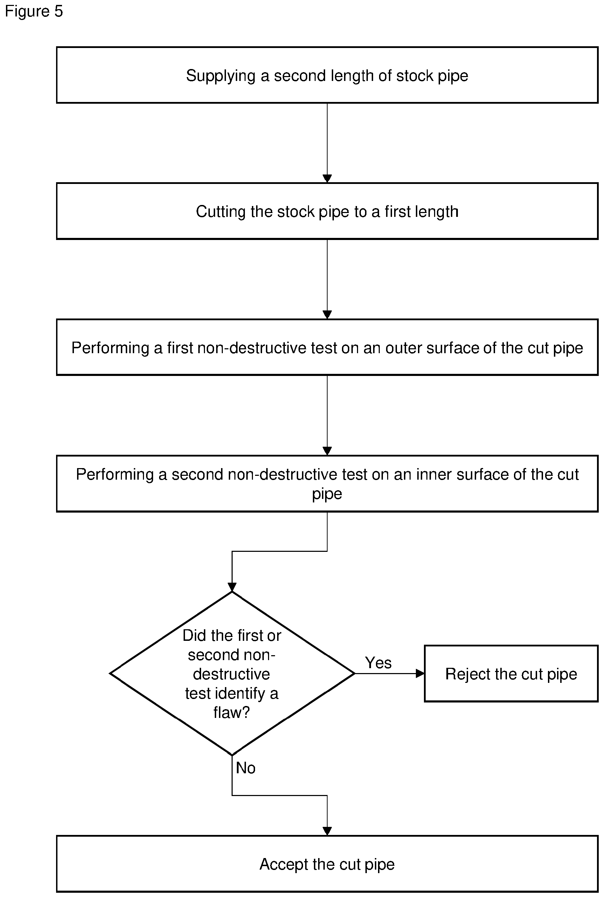

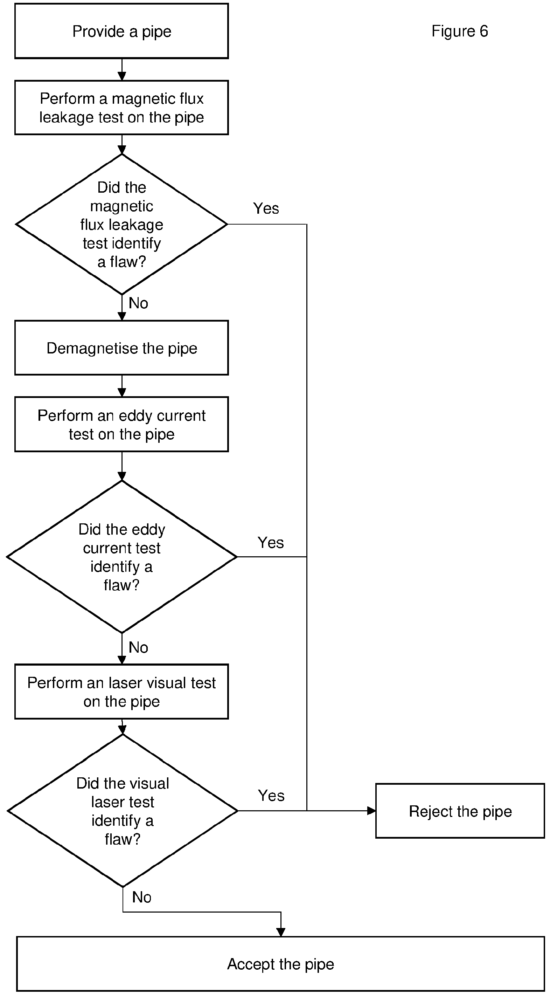

Methods according to the present disclosure will now be described with respect to Figures 5 and 6. These methods may be carried out on the testing device 100 of Figure 1. Alternatively, these methods may be carried out using any suitable apparatus or combination of apparatus.

Figure 5 shows a method of testing a component for a system that includes a pipe of a first length. A stock pipe having a second length, greater than the first length, is provided. As discussed above, this may be provided by any suitable method such as by drawing a pipe with a larger diameter through a die, such as via cold drawing.

The stock pipe is then cut to a first length, so as to produce a cut pipe 8. The cutting may be via any suitable method.

The cut pipe 8 is then inspected using a non-destructive inspection technique. This inspection includes two steps, performed on an outer surface 8A and an inner surface 8B of the cut pipe 8 respectively. While the flowchart shows the first non-destructive test on the outer surface 8A followed by the second non-destructive test on the inner surface 8A, this is not a requirement of the method. Indeed, the order of the first non-destructive test and the second non-destructive test may be reversed, or they may be simultaneous.

Each of the first non-destructive test and the second non-destructive test may identify a discontinuity 8C in the cut pipe 8 which is an actual flaw. The term actual flaw (sometimes shortened to flaw) means a discontinuity 8C which is sufficient for the cut pipe 8 to be unsatisfactory. That is, it is appreciated that no cut pipe 8 will be perfect and all with have some discontinuities. However, the non-destructive tests may identifies discontinuities at a particular sensitivity. In this way, the first non-destructive test and the second non-destructive test only identifying a discontinuity 8C which would prevent the cut pipe 8 from meeting a particular given standard and hence is an actual flaw. Any reference to a discontinuity 8C or flaw must be understood in this context.

If the first non-destructive test and/or the second non-destructive test identifies such a discontinuity 8C which amounts to an actual flaw, the cut pipe is rejected. By rejected, the cut pipe 8 is withdrawn from future manufacturing of the system incorporating the cut pipe 8. A rejected cut pipe 8 may be scrapped or recycled as appropriate. The rejected cut pipe 8 may be incorporated into a system which has less strict tolerances, which it meets, if appropriate.

While the flowchart shows this rejection as a single decision step, it is noted that the method may carry out two separate decisions, one after each non-destructive test. That is, if a cut pipe 8 fails the first non-destructive test it may be immediately rejected, without carrying out the second non-destructive test. This may also be the case if the second non-destructive test is performed first.

If the first non-destructive test and the second non-destructive test do not identify any discontinuities 8C which are actual flaws, the cut pipe 8 is accepted and continues in the manufacturing process to make the product incorporating the cut pipe 8.

The first non-destructive test and the second non-destructive test may be an eddy current test, as described above in relation to Figures 3A to 3C. Alternatively, the first non-destructive test and the second non-destructive test may be a visual laser test, as described above in relation to Figures 4 to 4B.

The method may further include the step of performing a magnetic flux leakage test, as described above in relation to Figures 2A to 2B. Such a magnetic flux leakage test may be performed after the first non-destructive test and the second non-destructive test. That is, the system may perform the magnetic flux leakage test, and then perform the first non-destructive test and the second non-destructive test.

In embodiments where the first non-destructive test and the second non-destructive test are an eddy current test, with a preceding magnetic flux leakage test, it may be necessary to demagnetise the cut pipe 8 as discussed above. The cut pipe 8 may be demagnetised after performing the magnetic flux leakage test and before performing the non-destructive inspection technique including the first non-destructive test and the second non-destructive test.

A visual laser test, as described above in relation to Figures 4 to 4B may also be performed on the cut pipe 8. Particularly, this visual laser test may be carried out on both an outer surface 8A and an inner surface 8B of the cut pipe 8. The visual laser test may be the last test to be performed on the cut pipe 8, after the magnetic flux leakage test and the first non-destructive test and the second non-destructive test, as appropriate. The visual laser test may only be performed if the preceding tests do not identify a discontinuity 8C which amounts to an actual flaw in the cut pipe 8.

Each of the tests applied to the cut pipe 8 are to identify a discontinuity 8C in the cut pipe 8 which is an actual flaw that would mean that the cut pipe 8 must be rejected. This analysis is carried out by comparing a measurement of the discontinuity 8C of the cut pipe 8 taken during the test to a threshold. If the measurement exceeds (or as appropriate, is less than) the threshold, the cut pipe 8 may be rejected as the discontinuity 8C is an actual flaw.

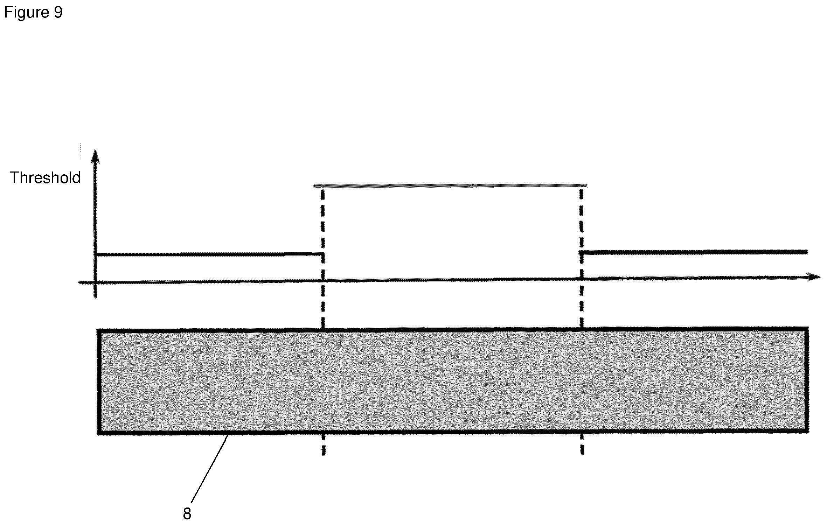

In many applications, different areas of the cut pipe 8 may undergo different stresses in use. This means that different areas of the cut pipe 8 may be required to withstand different forces. An area of the cut pipe which must withstand a lower force may be able to incorporate a discontinuity 8C which would be an actual flaw in an area which must withstand greater forces. For example, a deeper notch (and hence discontinuity) in the cut pipe 8 may be allowable in a region that will only have to withstand relatively smaller forces. The same notch depth (and hence discontinuity) may not be allowable in a region of the cut pipe 8 that will have to withstand greater forces. Therefore, the thresholds used to identify whether a discontinuity 8C is an actual flaw vary based upon where the measurement is taken on the cut pipe 8. The thresholds vary based upon a longitudinal and/or a circumferential location of the measurement. Likewise, the thresholds may be different for the outer surface 8A and inner surface 8B of the cut pipe 8. A particular application of this in relation to a cut pipe 8 for an airbag will be described later in relation to Figure 9.

As noted above, the method of Figure 5 may be performed using the appropriate elements of the test device 100 of Figure 1, or on using any suitable apparatus.

A further method is shown in Figure 6. This method is for testing a pipe 8 suitable for use in an airbag system. Particularly, a pipe 8 which may undergo further steps after the testing process in order to prepare it for use in an airbag system as described in the background.

A pipe 8 is provided. The pipe 8 may be provided in accordance with the earlier disclosure in that it may be a cut pipe 8 which has been cut from a longer stock pipe. Alternatively, the pipe 8 may be provided in a suitable size for its purpose via any suitable method.

Three separate non-destructive testing methods are applied to the pipe 8: a magnetic flux leakage test, an eddy current test, and a laser visual test. These tests may be performed using the testing device 100 of Figure 1, or using any suitable apparatus. While Figure 6 shows the three tests in a particular order this is not necessarily the case, and the tests may be performed in any order and/or simultaneously as appropriate.

Particular embodiments of the method do include an order of steps. Particularly, the magnetic flux leakage test may be performed before the eddy current test and the laser visual test. Optionally, the pipe 8 may be demagnetised after the magnetic flux leakage test and before the eddy current test.

In further embodiments, the laser visual test may be performed last. The laser visual test involves the projection of a laser and the capture of an image of the laser as described above in relation to Figures 4 to 4B.

Figure 6 shows a decision after each of the tests to consider whether the test has identified an actual flaw in the pipe 8. If a flaw is identified in the pipe 8, the pipe 8 is rejected and not used in the manufacturing of the airbag. This may be carried out in accordance with any of the flaw identification methods discussed above. It is not necessary for the method to include this decision after each test. Instead, one or more of these decisions may be consolidated into a joint decision taken after a plurality of tests have been carried out. For example, the method may check if the magnetic flux leakage test and/or the eddy current test have identified a flaw at the same time.

If any of the tests have identified a flaw, the pipe 8 may be immediately rejected and no further tests may be carried out. This particularly may be the case with regard to the visual laser test. As discussed above in relation to Figures 4 to 4B, this test is relatively processor intensive and slow. It may therefore be preferable to not perform this test on a pipe 8 which has already failed an earlier test such as the magnetic flux leakage test or the eddy current test by identifying a flaw in these earlier tests.

As discussed above, the eddy current test and/or the visual laser test may be performed on both an outer surface 8A and an inner surface 8B of the pipe 8.

If no actual flaw is identified in the pipe 8 following this method, the pipe 8 may be used to manufacture an airbag pipe 70 for inflating an airbag.

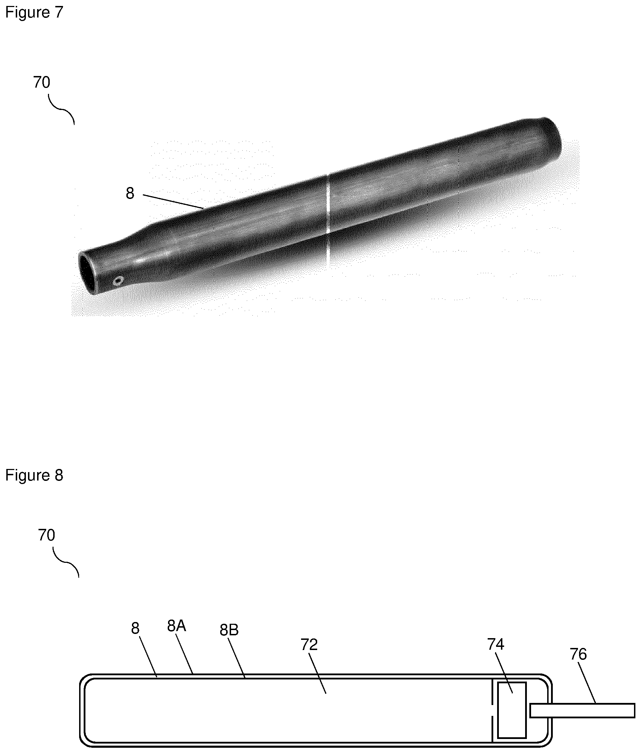

An airbag pipe 70 is shown in Figures 7 and 8. The airbag pipe 70 is formed of the pipe 8 having been subjected to any of the above methods. The pipe 8 is filled with a pressurised gas 72. This pressurised gas 72 may, for example, be completely or partly a mixture of helium, argon, oxygen and nitrous oxide. The pipe 8 is then sealed, with a frangible element provided. The frangible element may substantially form one of the ends of the airbag pipe 70. The frangible element is arranged to break following a vehicle accident so as to release the pressurised gas 72 and inflate the airbag.

The breaking of the frangible element may be triggered, for example with a small pyrotechnic charge 74 and an igniter 76. The pyrotechnic charge 74 may include, for example, a composite propellant having a silicon-based binder and an oxidizing charge based on ammonium perchlorate and sodium nitrate. In the event of a vehicle crash, the igniter 76 will ignite the pyrotechnic charge, thereby breaking the frangible element and releasing the pressurised gas 72 to inflate the airbag. Of course, the frangible element may be broken in any suitable manner during a crash, including systems which do not use a pyrotechnic charge 74.

As discussed above, the testing methods compare measurements to a threshold in order to determine whether a discontinuity 8C is an actual flaw in the cut pipe 8. This threshold is different based upon the location of the measurement. For example, in an airbag pipe 70, the greatest forces are experienced at the two ends of the airbag pipe 70. Thus, the thresholds for the two ends of the airbag pipe 70 may be lower.

This is depicted in Figure 9, which shows a schematic of the pipe 8 for forming an airbag pipe 70. In the first and second ends of the pipe 8, there is a lower threshold applied for the non-destructive testing. Thus, the same discontinuity 8C may not exceed the threshold if it is present in the middle section and hence would not be an actual flaw in this middle section, while it would exceed the lower threshold if it is present in the first or second ends and would be an actual flaw in these ends.

It is further noted that in an airbag pipe 70, even the two ends may have different thresholds. One end may undergo greater stresses in use during the deployment. During the testing, one end of the pipe 8 may be marked so that it can be identified later. This means that different thresholds may be applied to each end of the pipe 8.

As different sized discontinuities may be allowable in the different regions of the pipes, the non-destructive testing may be carried out at different resolutions in the different regions. For example, in the end regions of an airbag pipe 70 where smaller discontinuities 8C are classified as actual flaws, testing devices with a higher resolution may be used when compared to the testing devices being used for the mid-section of the airbag pipe 70. For example, the eddy current testing may include a number of conductive coils 21 arranged in an array such that a first subset of the conductive coils 21 is positioned adjacent an end of the airbag pipe 70 and a second subset of the conductive coils 21 is positioned adjacent a mid-section of the airbag pipe 70. The resolution of the conductive coils 21 may be varied by adjusting the coil size such that the first subset of the conductive coils 21 has a higher resolution than the second subset of the conductive coils 21. Thus, the first subset of the conductive coils 21 is able to identify a smaller discontinuity 8C than the second subset of the conductive coils 21.

## Claims

1. A method of testing a pipe (8) for an airbag system, the method comprising inspecting the pipe (8) for identifying flaws, the method comprising the steps of:
performing a magnetic flux leakage test on the pipe (8);
performing an eddy current test on the pipe (8); and
performing a laser visual test on the pipe (8), by projecting a laser (34) onto the pipe (8) and capturing an image of the projected laser,
wherein a flaw is identified by comparing a measurement from at least one of the magnetic flux leakage test, the eddy current test, and the laser visual test with a threshold, wherein the threshold is varied based upon a longitudinal location and/or a circumferential location of the measurement along the pipe (8) to take into account different stresses in use of the pipe (8).

2. The method of claim 1, wherein the threshold is lower at a first end and a second end of the pipe (8).

3. The method of any preceding claim, wherein a flaw is identified by taking a plurality of measurements during at least one of the magnetic flux leakage test, the eddy current test, and the laser visual test, and wherein the measurements are taken at a first resolution at a first location on the pipe (8), wherein the measurements are taken at a second resolution at a second location on the pipe (8), the second resolution being different from the first resolution.

4. The method of any preceding claim, wherein a flaw is identified based on a detection sensitivity by taking a plurality of measurements during at least one of the magnetic flux leakage test, the eddy current test, and the laser visual test, and varying the detection sensitivity for different locations on the pipe (8).

5. The method of any preceding claim, wherein the eddy current test and/or the laser visual test is performed on an inner surface (8B) and an outer surface (8A) of the pipe (8)

6. The method of any preceding claim, wherein the magnetic flux leakage test is performed before the eddy current test and the laser visual test.

7. The method of claim 6, further comprising the step of:
demagnetising the pipe (8) between the steps of:
performing the magnetic flux leakage test; and
performing the eddy current test and the laser visual test

8. The method of any preceding claim wherein the laser visual test is performed after the magnetic flux leakage test and the eddy current test.

9. A method of testing of a component of a system that includes a pipe (8) of a first length, the method comprising the steps of:
providing a second length of stock pipe, the second length being greater than the first length;
cutting the stock pipe to the first length to produce a cut pipe (8);
inspecting the cut pipe (8) using a non-destructive inspection technique, the non-destructive inspection technique including the steps of:
performing a first non-destructive test on an inner surface (8B) of the cut pipe (8);
performing a second non-destructive test on an outer surface (8A) of the cut pipe (8); and
rejecting the cut pipe (8) if the step of inspecting the cut pipe (8) identifies a flaw, wherein the step of rejecting the cut pipe (8) if the step of inspecting the cut pipe (8) identifies a flaw comprises comparing a measurement during the step of inspecting the cut pipe (8) to a threshold, wherein the threshold is varied based upon a longitudinal location and/or a circumferential location of the measurement along the cut pipe (8) to take into account different stresses in use of the cut pipe (8).

10. The method of claim 9, wherein the threshold is lower at a first end and a second end of the cut pipe (8).

## Patentansprüche

1. Verfahren eines Testens eines Rohres (8) für ein Airbagsystem, wobei das Verfahren ein Untersuchen des Rohres (8) zum Identifizieren von Fehlern umfasst, wobei das Verfahren die Schritte umfasst:
ein Durchführen eines magnetischen Streuflusstests an dem Rohr (8);
ein Durchführen eines Wirbelstromtests an dem Rohr (8); und
ein Durchführen eines optischen Tests mit einem Laser an dem Rohr (8), durch Projizieren eines Lasers (34) auf das Rohr (8) und Aufnehmen eines Bildes des projizierten Lasers,
wobei ein Fehler durch Vergleichen einer Messung von wenigstens einem von dem magnetischen Streuflusstest, dem Wirbelstromtest und dem optischen Test mit einem Laser mit einem Schwellenwert identifiziert wird, wobei der Schwellenwert basierend auf einer longitudinalen Position und/oder einer Umfangsposition der Messung entlang des Rohres (8) variiert wird, um verschiedene Spannungen unter Verwendung des Rohres (8) zu berücksichtigen.

2. Verfahren nach Anspruch 1, wobei der Schwellenwert an einem ersten Ende und einem zweiten Ende des Rohres (8) niedriger ist.

3. Verfahren nach einem vorhergehenden Anspruch, wobei ein Fehler durch Vornehmen einer Mehrzahl von Messungen während wenigstens einem von dem magnetischen Streuflusstest, dem Wirbelstromtest und dem optischen Test mit einem Laser identifiziert wird und wobei die Messungen mit einer ersten Auflösung an einer ersten Position an dem Rohr (8) vorgenommen werden, wobei die Messungen mit einer zweiten Auflösung an einer zweiten Position an dem Rohr (8) vorgenommen werden, wobei die zweite Auflösung von der ersten Auflösung verschieden ist.

4. Verfahren nach einem vorhergehenden Anspruch, wobei ein Fehler basierend auf einer Detektionssensitivität durch Vornehmen einer Mehrzahl von Messungen während wenigstens einem von dem magnetischen Streuflusstest, dem Wirbelstromtest und dem optischen Test mit einem Laser und durch Variieren der Detektionssensitivität für verschiedene Positionen an dem Rohr (8) identifiziert wird.

5. Verfahren nach einem vorhergehenden Anspruch, wobei der Wirbelstromtest und/oder der optische Test mit einem Laser an einer Innenfläche (8B) und einer Außenfläche (8A) des Rohres (8) durchgeführt wird.

6. Verfahren nach einem vorhergehenden Anspruch, wobei der magnetische Streuflusstest vor dem Wirbelstromtest und dem optischen Test mit einem Laser durchgeführt wird.

7. Verfahren nach Anspruch 6, ferner umfassend den Schritt:
ein Entmagnetisieren des Rohres (8) zwischen den Schritten:
eines Durchführens des magnetischen Streuflusstests; und
eines Durchführens des Wirbelstromtests sowie des optischen Tests mit einem Laser.

8. Verfahren nach einem vorhergehenden Anspruch, wobei der optische Test mit einem Laser nach dem magnetischen Streuflusstest und dem Wirbelstromtest durchgeführt wird.

9. Verfahren eines Testens einer Komponente eines Systems, welches ein Rohr (8) einer ersten Länge umfasst, wobei das Verfahren die Schritte umfasst:
ein Bereitstellen einer zweiten Länge eines Vorratsrohrs, wobei die zweite Länge größer ist als die erste Länge;
ein Schneiden des Vorratsrohrs auf die erste Länge, um ein geschnittenes Rohr (8) herzustellen;
ein Untersuchen des geschnittenen Rohres (8) unter Verwendung einer zerstörungsfreien Untersuchungsmethode, wobei die zerstörungsfreie Untersuchungsmethode die Schritte umfasst:
ein Durchführen eines ersten zerstörungsfreien Tests an einer Innenfläche (8B) des geschnittenen Rohres (8);
ein Durchführen eines zweiten zerstörungsfreien Tests an einer Außenfläche (8A) des geschnittenen Rohres (8); und
ein Abweisen des geschnittenen Rohres (8), wenn der Schritt des Untersuchens des geschnittenen Rohres (8) einen Fehler identifiziert, wobei der Schritt eines Abweisens des geschnittenen Rohres (8), wenn der Schritt des Untersuchens des geschnittenen Rohres (8) einen Fehler identifiziert, ein Vergleichen einer Messung während des Schritts eines Untersuchens des geschnittenen Rohres (8) mit einem Schwellenwert umfasst, wobei der Schwellenwert basierend auf einer longitudinalen Position und/oder einer Umfangsposition der Messung entlang des geschnittenen Rohres (8) variiert wird, um verschiedene Spannungen unter Verwendung des geschnittenen Rohres (8) zu berücksichtigen.

10. Verfahren nach Anspruch 9, wobei der Schwellenwert an einem ersten Ende und einem zweiten Ende des geschnittenen Rohres (8) niedriger ist.

## Revendications

1. Procédé d'essai d'un tube (8) pour un système d'airbag, le procédé comportant l'inspection du tube (8) pour identifier des défauts, le procédé comportant les étapes suivantes :
la réalisation d'un essai de fuite par flux magnétique sur le tube (8) ;
la réalisation d'un essai par courants de Foucault sur le tube (8) ; et
la réalisation d'un essai visuel au laser sur le tube (8), par projection d'un laser (34) sur le tube (8) et capture d'une image du laser projeté,
dans lequel un défaut est identifié par comparaison d'une mesure d'au moins l'un parmi l'essai de fuite par flux magnétique, l'essai par courants de Foucault et l'essai visuel au laser à un seuil, dans lequel le seuil subit une variation sur la base d'un emplacement longitudinal et/ou d'un emplacement circonférentiel de la mesure le long du tube (8) pour prendre en compte différentes contraintes d'utilisation du tube (8).

2. Procédé selon la revendication 1, dans lequel le seuil est inférieur à une première extrémité et à une deuxième extrémité du tube (8).

3. Procédé selon une quelconque revendication précédente, dans lequel un défaut est identifié par prise d'une pluralité de mesures pendant au moins l'un parmi l'essai de fuite par flux magnétique, l'essai par courants de Foucault et l'essai visuel au laser, et dans lequel les mesures sont prises à une première résolution à un premier emplacement sur le tube (8), dans lequel les mesures sont prises à une deuxième résolution à un deuxième emplacement sur le tube (8), la deuxième résolution étant différente de la première résolution.

4. Procédé selon une quelconque revendication précédente, dans lequel un défaut est identifié sur la base d'une sensibilité de détection par prise d'une pluralité de mesures pendant au moins l'un parmi l'essai de fuite par flux magnétique, l'essai par courants de Foucault et l'essai visuel au laser, et par variation de la sensibilité de détection pour différents emplacements sur le tube (8).

5. Procédé selon une quelconque revendication précédente, dans lequel l'essai par courants de Foucault et/ou l'essai visuel au laser est réalisé sur une surface interne (8B) et une surface externe (8A) du tube (8).

6. Procédé selon une quelconque revendication précédente, dans lequel l'essai de fuite par flux magnétique est réalisé avant l'essai par courants de Foucault et l'essai visuel au laser.

7. Procédé selon la revendication 6, comportant en outre l'étape suivante :
la démagnétisation du tube (8) entre les étapes suivantes :
la réalisation de l'essai de fuite par flux magnétique ; et
la réalisation de l'essai par courants de Foucault et de l'essai visuel au laser.

8. Procédé selon une quelconque revendication précédente, dans lequel l'essai visuel au laser est réalisé après l'essai de fuite par flux magnétique et l'essai par courants de Foucault.

9. Procédé d'essai d'un composant d'un système qui inclut un tube (8) d'une première longueur, le procédé comportant les étapes suivantes :
la fourniture d'une deuxième longueur de tube de réserve, la deuxième longueur étant supérieure à la première longueur ;
la découpe du tube de réserve à la première longueur pour produire un tube découpé (8) ;
l'inspection du tube découpé (8) à l'aide d'une technique d'inspection non destructive, la technique d'inspection non destructive incluant les étapes suivantes :
la réalisation d'un premier essai non destructif sur une surface interne (8B) du tube découpé (8) ;
la réalisation d'un deuxième essai non destructif sur une surface externe (8A) du tube découpé (8) ; et
le rejet du tube découpé (8) si l'étape d'inspection du tube découpé (8) identifie un défaut, dans lequel l'étape de rejet du tube découpé (8) si l'étape d'inspection du tube découpé (8) identifie un défaut comporte la comparaison d'une mesure lors de l'étape d'inspection du tube découpé (8) à un seuil, dans lequel le seuil subit une variation sur la base d'un emplacement longitudinal et/ou d'un emplacement circonférentiel de la mesure le long du tube découpé (8) pour prendre en compte différentes contraintes d'utilisation du tube découpé (8).

10. Procédé selon la revendication 9, dans lequel le seuil est inférieur à une première extrémité et à une deuxième extrémité du tube découpé (8).
